# EUROPEAN PATENT SPECIFICATION

(11) **EP 3 591 937 B1**
(45) Date of publication and mention of the grant of the patent: **02.09.2020**
(21) Application number: 18181440.1
(22) Date of filing: 03.07.2018
(51) Int. Cl.: H04L 29/08

(54) **COMMUNICATION DEVICE, METHOD AND COMPUTER PROGRAM PRODUCT FOR PROCESSING SENSOR DATA WITH EDGE SERVER ASSISTANCE**
KOMMUNIKATIONSVORRICHTUNG, VERFAHREN UND COMPUTERPROGRAMM ZUR VERARBEITUNG VON SENSORDATEN MIT RANDSERVER-UNTERSTÜTZUNG
DISPOSITIF DE COMMUNICATION, PROCÉDÉ ET PRODUIT-PROGRAMME D'ORDINATEUR POUR LE TRAITEMENT DE DONNÉES DE CAPTEURS AVEC ASSISTANCE D'UN SERVEUR DE PÉRIPHÉRIE

(43) Date of publication of application: 08.01.2020
(73) Proprietor: Deutsche Telekom AG, 53113 Bonn (DE)
(72) Inventor: SCHNIEDERS, Dominik, 52078 Aachen (DE)
(74) Representative: Vossius & Partner Patentanwälte Rechtsanwälte mbB

(56) References cited:
- US-A1- 2017 278 323
- US-A1- 2018 181 868
- US-B2- 6 625 569

## Description

### TECHNICAL FIELD

In general, the invention relates to communication networks. More specifically, the invention relates to a communication device and edge server in a communication network, in particular a 5G cellular communication network.

### BACKGROUND

Edge computing is a method of optimizing network computing systems by taking the computing resources, applications, data, and services often provided by edge servers away from central network nodes, i.e. cloud computing in the Internet, to the edge of the network of the operator. In this architecture, data often comes in from the physical world via various sensors, and actions are taken to change physical state via various forms of output and actuators. By performing analytics and knowledge generation at the edge, communications bandwidth between systems under control and the core network can be reduced. Thus, edge computing takes advantage of proximity to the physical items of interest also exploiting relationships those items may have to each other.

The close proximity of an edge server to the communication end nodes, such as user equipment, mobile terminals and loT devices, allows reducing the latency of the roundtrip time (RTT) between the communication end nodes and an edge server. In a wireless communication network, for instance, the closer an edge server is located to an access point of the radio access network, such as a multi service access node (MSAN), the smaller the latency between the communication end nodes and the edge server. Having a small latency is generally desirable, because this allows using the usually more powerful computing resources of an edge server, while still providing "real-time" or "almost real-time" functionalities for the less computationally powerful communication end nodes (hereinafter reference will be made to "real-time" functionalities with the understanding that these include "almost real-time" functionalities as well).

It is foreseeable that future wireless communication networks, such as 5G networks, will achieve even smaller latencies in their radio access networks and, thus, smaller end-to-end latencies than current wireless communication networks. However, data provided by the communication end nodes, such as sensor data, still will have to be transferred to an edge server for harnessing the more powerful computational resources of the edge server for processing the data provided by the communication end nodes. For many application scenarios, such as autonomous driving or advanced driver assistance systems, quite large amounts of data, such as data provided by camera, radar and lidar devices, will have to be transferred to an edge server.

However, both wired and wireless communication networks are due to their primary conventional use case, namely communication between communication end nodes, generally designed asymmetrically in that the available down link data rate is usually much larger than the available uplink data rate. As will be appreciated, this inherent asymmetry is disadvantageous for the application scenarios described above, which require a large uplink data rate for applying the large amounts of data collected by the communication end nodes to the edge server. This will be even more of an issue for application scenarios where the communication end nodes provide streams of data, such as video data provided by surveillance cameras, and/or which involve large numbers of communication end nodes. Under these circumstances all of the available uplink data rate might be necessary for transferring the data from the communication end nodes to the edge server, which might negatively affect other network services.

Thus, there is a need for improved devices, methods and systems allowing running realtime applications on communication end nodes, while harnessing the computational power provided by edge computing, i.e. edge servers.

US 2018/181868 A1 discloses cloud-assisted perceptual computing analytics.

### SUMMARY OF THE INVENTION

It is an object of the invention to provide improved devices, methods and systems allowing running real-time applications on communication end nodes, while harnessing the computational power provided by edge servers.
The foregoing and other objects are achieved by the subject matter of the independent claims. Further implementation forms are apparent from the dependent claims, the description and the figures.

According to a first aspect the invention relates to a communication device, such as a mobile terminal, a user equipment and the like, for communication in a communication network providing edge computing services, i.e. having at least one edge server. The communication device comprises: a sensor configured to provide sensor data; a processor configured to execute a real-time application, wherein the real-time application is configured to process the sensor data and to provide a result on the basis of processing the sensor data, wherein the processor is further configured to determine a confidence value of the result; and a communication interface configured to send, in case the confidence value of the result provided by the real-time application is smaller than a threshold value, the sensor data to the edge server and to receive from the edge server a further result based on processing the sensor data by the edge server. Thus, an improved communication device is provided allowing running real-time applications on the communication device, while harnessing the computational power provided by edge servers.

In a further possible embodiment of the communication device according to the first aspect, the processor is further configured to continue to execute the real-time application on the basis of the further result received from the edge server, in case the confidence value of the result provided by the real-time application is smaller than the threshold value.

In a further possible embodiment of the communication device according to the first aspect, the processor is further configured to continue to execute the real-time application on the basis of the result provided by the real-time application, in case the confidence value of the result provided by the real-time application is equal to or larger than the threshold value.

In a further possible embodiment of the communication device according to the first aspect, the processor is configured to implement a neural network, wherein the neural network is configured to determine the confidence value of the result provided by the real-time application.

The processor is further configured to classify the result provided by the real-time application as anomalous or non-anomalous and wherein the communication interface is configured to send, in case the result is classified as anomalous, the sensor data to the edge server and to receive from the edge server the result based on processing the sensor data by the edge server.

The communication interface is configured to receive external data from one or more neighboring communication devices, wherein the processor is configured to classify the result provided by the real-time application as anomalous or non-anomalous using the external data.

The external data comprises one or more results provided by a respective real-time application of the one or more neighboring communication devices, wherein the processor is configured to classify the result provided by the real-time application as anomalous or non-anomalous on the basis of a comparison between the result provided by the real-time application and the one or more results provided by the respective real-time application of the one or more neighboring communication devices.

In a further possible embodiment of the communication device according to the first aspect, the processor is further configured to classify the result provided by the real-time application as anomalous or non-anomalous using internal data stored and/or generated by the communication device, wherein the internal data comprises data provided by a further sensor device of the communication device, one or more previous results provided by the real-time application, position data of the communication device, and/or map data of the communication device.

In a further possible embodiment of the communication device according to the first aspect, the sensor is configured to provide a sensor data stream, wherein the sensor data comprise a temporal portion of the sensor data stream.

According to a second aspect the invention relates to a communication system comprising: an edge server comprising a processor and a communication interface; and a communication device according to the first aspect of the invention. The communication interface of the edge server is configured to receive, in case the confidence value of the result provided by the real-time application is smaller than the threshold value, the sensor data from the communication device, wherein the processor of the edge server is configured to process the sensor data and to provide a further result on the basis of processing the sensor data, and wherein the communication interface is further configured to send the further result to the communication device.

According to a third aspect the invention relates to a corresponding method of operating a communication device, such as a mobile terminal, a user equipment and the like, in a communication network providing edge computing services, i.e. having at least one edge server.

In a further possible embodiment of the method according to the third aspect, the method comprises the further step of continuing to execute the real-time application on the basis of the further result received from the edge server, in case the confidence value of the result provided by the real-time application is smaller than the threshold value.

In a further possible embodiment of the method according to the third aspect, the method comprises the further step of continuing to execute the real-time application on the basis of the result provided by the real-time application, in case the confidence value of the result provided by the real-time application is equal to or larger than the threshold value. In a further possible embodiment of the method according to the third aspect, the method further comprises implementing a neural network by the processor of the communication device, wherein the step of determining the confidence value of the result by the processor of the communication device comprises determining the confidence value of the result provided by the real-time application by the neural network.

According to a fourth aspect the invention relates to a computer program product comprising program code for performing the method according to the third aspect of the invention, when executed on a computer or a processor.

Embodiments of the invention are applicable for communication devices that use wireless communication technologie, such as Global System for Mobile communications (GSM, 2G), GSM EDGE radio access Network (GERAN), General Packet Radio Service

(GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system.

In embodiments of the present invention communication devices may be capable of communicating content, data, information and/or signals via a wireless medium or channel. In some embodiments, the wireless medium may include, for example, a radio channel, a cellular channel, an RF channel, a WiFi channel, an IR channel, a Bluetooth (BT) channel, a Global Navigation Satellite System (GNSS) channel, and the like.

In embodiments of the present invention communication devices may include one or more radio modules (or short radios) including circuitry and/or logic to perform wireless communication between the communication devices. In embodiments of the present invention the radio modules may include one or more wireless receivers (Rx) including circuitry and/or logic to receive wireless communication signals, RF signals, frames, blocks, transmission streams, packets, messages, data items, and/or data. In embodiments of the present invention the radio modules may include one or more wireless transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analog to digital and/or digital to analog converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the communication devices may be configured to communicate according to any other additional or alternative modulation scheme. In embodiments of the present invention, the radios may include, or may be associated with, one or more antennas. In one example, a communication device may include a single antenna. In another example, a communication device may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention the processor of the communication device may be configured to perform and/or to trigger, cause, instruct and/or control the communication device to perform, one or more communications, to generate and/or communicate one or more messages and/or transmissions, and/or to perform one or more functionalities, operations and/or procedures. In embodiments of the present invention the processor may include circuitry and/or logic, Media-Access Control (MAC) circuitry and/or logic, Physical Layer (PHY) circuitry and/or logic, and/or any other circuitry and/or logic, configured to perform the functionality of the processor.

In embodiments of the present invention, at least part of the functionality of the processor may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic block diagram illustrating a wireless communication network comprising a communication system with a communication device and an edge server according to an embodiment; and
Fig. 2 shows a flow diagram illustrating steps of a method for operating a communication device according to an embodiment.

In the various figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

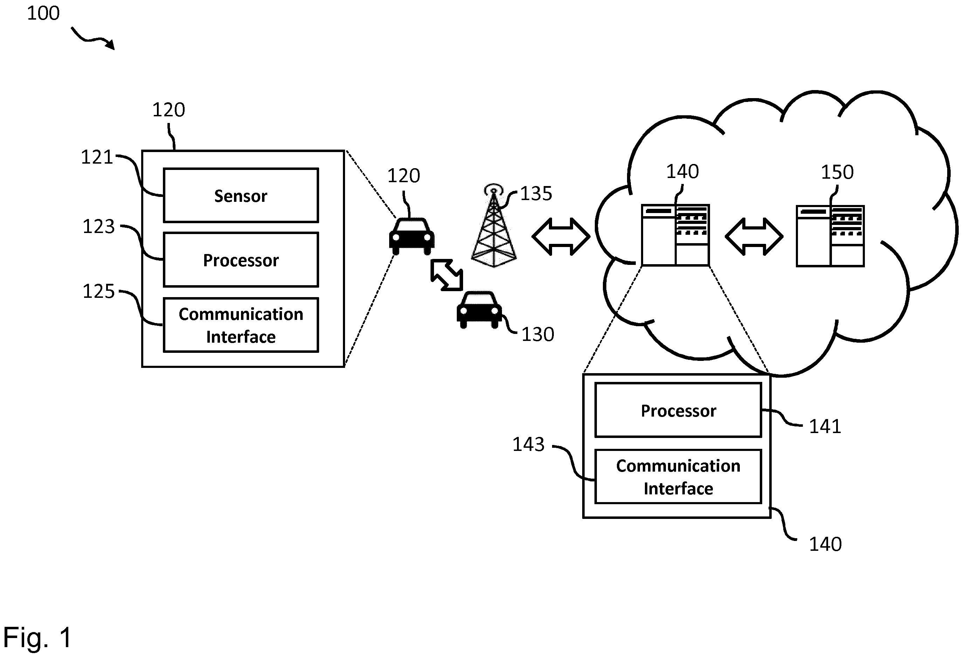

Figure 1 shows a schematic diagram of a wireless or cellular communication network 100. The cellular communication network 100 can be, for instance, a 3G, 4G or 5G cellular communication network 100. The cellular communication network 100 can comprises a radio access network, a core network and a plurality of communication devices 120, 130, i.e. communication end nodes. In the exemplary embodiment shown in figure 1, the plurality of communication devices 120, 130 are smart vehicles, in particular the communication modules thereof. As will be appreciated, however, the communication devices 120, 130 could be implemented as other types of communication devices as well, such as mobile terminals, user equipments or any other type of mobile or stationary communication devices configured for communication in the cellular communication network 100.

For the sake of clarity figure 1 shows only a single exemplary base station 135, which constitutes part of the radio access network of the cellular communication network 100. In other embodiments the radio access network of the cellular communication network 100 comprises a plurality of base stations similar to the exemplary base station 135 shown in figure 1.

The core network of the communication network 100 comprises entities or functions for operating the communication network 100. In the exemplary embodiment shown in figure 1 the core network of the communication network 100 comprises, for instance, an authentication entity 150 configured to perform an authentication procedure with each of the communication devices 120, 130 before granting full access to the communication network 100.

The communication network 100 provides edge computing resources. For the sake of clarity figure 1 shows only a single exemplary edge server 140 providing such edge computing resources. In other embodiments the cellular communication network 100 comprises a plurality of edge servers similar to the exemplary edge server 140 shown in figure 1 for providing edge computing resources. The edge server 140 is located in close proximity to the base station 135 for providing, in particular, a small latency of the roundtrip time (RTT) between the edge server 140 and the plurality of communication devices 120, 130.

As can be taken from the more detailed view shown in figure 1, the communication device 120 comprises at last one sensor 121 configured to collect and provide sensor data. In an embodiment, the sensor 121 could be an image camera, a video camera, a radar device, a lidar device, a position sensor, an orientation sensor or the like. In an embodiment, the sensor 121 is configured to provide a continuous sensor data stream.

Moreover, the communication device 120 comprises a processor 123 configured to execute a real-time application. In an embodiment, the real-time (RT) application executed by the processor 123 could be, for instance, an autonomous driving application or an ADAS (advanced driver assistance system) RT application. The real-time application is configured to process the sensor data collected by the sensor 121 and to provide a result on the basis of processing the sensor data. For instance, the sensor data collected by the sensor 121 can comprise one or more images of a traffic sign defining a speed limit and the result provided by the processor 123 of the communication device 120 can be the value of the speed limit defined by the traffic sign. In this case the real-time application can comprise one or more image processing schemes and/or object recognition schemes. The processor 123 of the communication device 120 is further configured to determine a confidence value of the result. By way of example, in the exemplary embodiment described above the processor 123 of the communication device 120 can determine a confidence value of 80% or 0.8 for the result that the value of the speed limit defined by the traffic sign is 100 km/h. In an embodiment, the processor 123 of the communication device 120 is configured to implement a neural network for determining the confidence value of the result provided by the real-time application.

As can be taken from the more detailed view shown in figure 1, the communication device 120 further comprises a communication interface 125, which is configured to send the sensor data to the computationally more powerful edge server 140 for further processing, if the confidence value of the result provided by the real-time application is smaller than a threshold value. By way of example, in the exemplary embodiment described above the communication interface 125 of the communication device 120 will send the sensor data to the edge server 140 for further processing, for instance, in case of a threshold value of 90% or 0.9 and a confidence value of the result as determined by the processor 123 of 80% or 0.8. As will be appreciated, the choice of the threshold value has an effect on how often sensor data will be send to the edge server 140 for further processing. In case of a continuous sensor data stream provided by the sensor 121, the communication interface 125 can be configured to send a temporal portion, i.e. a time slice of the sensor data stream to the edge server 140.

As will be described in more detail further below, once the computationally more powerful edge server 140 has processed the sensor data (e.g. by executing the same image processing schemes and/or object recognition schemes as the real-time application being executed by the processor 123 of the communication device) and obtained a further result, the edge server 140 will return this further result back to the communication device 120.

In an embodiment, the processor 123 of the communication device 120 is further configured to continue executing the real-time application on the basis of the further result received from the edge server 140, in case the confidence value of the result provided by the real-time application is smaller than the threshold value. In the alternative case, i.e. in case the confidence value of the result provided by the real-time application is equal to or larger than the threshold value, the processor 123 of the communication device can be further configured to continue executing the real-time application on the basis of the original result provided by the real-time application.

In an embodiment, the processor 123 of the communication device 120 is further configured to classify the result provided by the real-time application as anomalous or non-anomalous. In case the result is classified by the processor 123 as anomalous, the communication interface 125 is configured (irrespective of the confidence value and the threshold value) to send the sensor data to the edge server 140 and to receive from the edge server 140 the further result based on processing the sensor data by the edge server 140.

In an embodiment, the processor 123 of the communication device 120 is configured to classify the result provided by the real-time application as anomalous or non-anomalous on the basis of internal data, i.e. data stored and/or collected by the communication device 120, and/or external data, i.e. data provided by other devices, such as the neighboring communication device 130. To this end, the communication interface 125 of the communication device 120 can be configured to receive external data from the neighboring communication device, for instance, via a D2D communication channel between the communication device 120 and the neighboring communication device 130.

In an embodiment, the external data comprises one or more results provided by a respective real-time application of the neighboring communication device 130, wherein the processor 123 of the communication device 120 is configured to classify the result provided by its real-time application as anomalous or non-anomalous on the basis of a comparison between the result provided by its real-time application and the one or more results provided by the real-time application of the neighboring communication device. By way of example, for the autonomous driving or ADAS scenario described above, the neighboring communication device 130 could already have passed a speed limit traffic sign still lying ahead for the communication device 120. In this case, the processor 123 of the communication device 120 can use the result determined by the real-time application of the neighboring communication device 130 (e.g. the result that the traffic sign defines a speed limit of 100 km/h) to classify the result provided by its real-time application (e.g. a speed limit of 10 km/h) as anomalous or non-anomalous.

In an embodiment, the internal data can comprise data provided by a further sensor device of the communication device 120, one or more previous results provided by the real-time application of the communication device 120, position data of the communication device 120, and/or map data of the communication device 120.

As can be taken from the more detailed view shown in figure 1, the edge server 140 can comprise a processor 141 and a communication interface 143. The communication interface 143 of the edge server 140 is configured to receive, in case the confidence value of the result provided by the real-time application of the communication device 120 is smaller than the threshold value, the sensor data from the communication device 120. The processor 141 of the edge server 140 is configured to process the sensor data using its more powerful resources and to provide a further result on the basis of processing the sensor data. The communication interface 143 is further configured to send the further result back to the communication device 120.

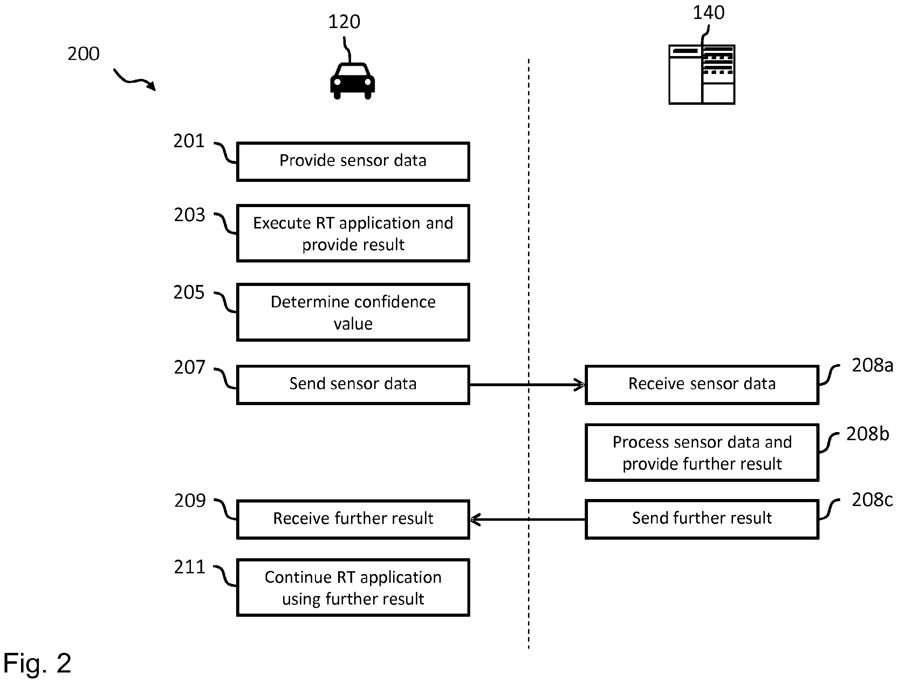

Figure 2 shows a flow diagram illustrating steps of a corresponding method for operating the communication device 120 according to an embodiment. The method 200 comprises the steps of: providing 201 sensor data by the sensor 121 of the communication device 120; executing 203 a real-time application by the processor 123 of the communication device 120, wherein the real-time application is configured to process the sensor data and to provide a result on the basis of processing the sensor data; determining 205 a confidence value of the result by the processor 123 of the communication device 120; in case the confidence value of the result provided by the real-time application is smaller than a threshold value, sending 207 the sensor data to the edge server 140; and receiving 209 from the edge server 140 a further result based on processing the sensor data by the edge server 140. In other words, in case the confidence value of the result provided by the real-time application is smaller than a threshold value, the edge server receives 208a the sensor data from the communication device 120, processes the sensor data and provides the further result (step 208b) and sends 208c the further result to the communication device 120.

As can be taken from the embodiment shown in figure 2, the method 200 can comprise the further step of continuing to execute the real-time application on the basis of the further result received from the edge server 140, in case the confidence value of the result provided by the real-time application is smaller than the threshold value. In the alternative case, i.e. if the confidence value of the result provided by the real-time application is equal to or larger than the threshold value (which, however, is not illustrated in figure 2), the method 200 can comprise the further step of continuing to execute the real-time application on the basis of the result provided by the real-time application.

As already described above, the method 200 can further comprise the step of implementing a neural network by the processor 123 of the communication device 120, wherein the step of determining 205 the confidence value of the result by the processor 123 of the communication device 120 comprises determining the confidence value of the result provided by the real-time application by the neural network.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.
Although specific aspects have been illustrated and described herein, it will be appreciated by those of ordinary skill in the art that a variety of alternate implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims, the invention may be practiced otherwise than as specifically described herein.

## Claims

1. A communication device (120) for communication in a communication network (100) having an edge server (140), the communication device (120) comprising:
a sensor (121) configured to provide sensor data;
a processor (123) configured to execute a real-time application, wherein the real-time application is configured to process the sensor data and to provide a result on the basis of processing the sensor data, wherein the processor (123) is further configured to determine a confidence value of the result; and
a communication interface (125) configured to send, in case the confidence value of the result provided by the real-time application is smaller than a threshold value, the sensor data to the edge server (140) and to receive from the edge server (140) a further result based on processing the sensor data by the edge server (140),
wherein the communication interface (125) is configured to receive external data from one or more neighboring communication devices (130) and wherein the processor (123) is configured to classify the result provided by the real-time application as anomalous or non-anomalous using the external data, wherein the external data comprises one or more results provided by a respective real-time application of the one or more neighboring communication devices (130) and wherein the processor (123) is configured to classify the result provided by the real-time application as anomalous or non-anomalous on the basis of a comparison between the result provided by the real-time application and the one or more results provided by the respective real-time application of the one or more neighboring communication devices (130); and
wherein the communication interface (125) is configured to send, in case the result is classified as anomalous, the sensor data to the edge server (140) and to receive from the edge server (140) the further result based on processing the sensor data by the edge server (140).

2. The communication device (120) of claim 1, wherein the processor (123) is further configured to continue to execute the real-time application on the basis of the further result received from the edge server (140), in case the confidence value of the result provided by the real-time application is smaller than the threshold value.

3. The communication device (120) of claim 1, wherein the processor (123) is further configured to continue to execute the real-time application on the basis of the result provided by the real-time application, in case the confidence value of the result provided by the real-time application is equal to or larger than the threshold value.

4. The communication device (120) of any one of the preceding claims, wherein the processor (123) is configured to implement a neural network, wherein the neural network is configured to determine the confidence value of the result provided by the real-time application.

5. The communication device (120) of claim 1, wherein the processor (123) is further configured to classify the result provided by the real-time application as anomalous or non-anomalous using internal data stored and/or generated by the communication device (120), wherein the internal data comprises data provided by a further sensor device of the communication device (120), one or more previous results provided by the real-time application, position data of the communication device (120), and/or map data of the communication device (120).

6. The communication device (120) of any one of the preceding claims, wherein the sensor (121) is configured to provide a sensor data stream and wherein the sensor data comprise a temporal portion of the sensor data stream.

7. A communication system comprising:
an edge server (140) comprising a processor (141) and a communication interface (143); and
a communication device (120) of any one of the preceding claims;
wherein the communication interface (143) of the edge server (140) is configured to receive, in case the confidence value of the result provided by the real-time application is smaller than the threshold value, the sensor data from the communication device (120), wherein the processor (141) of the edge server (140) is configured to process the sensor data and to provide a further result on the basis of processing the sensor data, and wherein the communication interface (143) of the edge server (140) is further configured to send the further result to the communication device (120).

8. A method (200) of operating a communication device (120) in a communication network (100) having an edge server (140), the method (200) comprising:
providing (201) sensor data by a sensor (121) of the communication device (120);
executing (203) a real-time application by a processor (123) of the communication device (120), wherein the real-time application is configured to process the sensor data and to provide a result on the basis of processing the sensor data;
determining (205) a confidence value of the result by the processor (123) of the communication device (120);
sending (207), by the communication device, in case the confidence value of the result provided by the real-time application is smaller than a threshold value, the sensor data to the edge server (140); and
receiving (209), at the communication device (120), from the edge server (140) a further result based on processing the sensor data by the edge server (140),
wherein the method (200) comprises the further steps of:
receiving, at the communication device (120), external data from one or more neighboring communication devices (130) and classifying the result provided by the real-time application as anomalous or non- anomalous using the external data, wherein the external data comprises one or more results provided by a respective real-time application of the one or more neighboring communication devices (130) and wherein classifying the result provided by the real-time application as anomalous or non-anomalous comprises comparing the result provided by the real-time application with the one or more results provided by the respective real-time application of the one or more neighboring communication devices (130); and
sending, by the communication device, in case the result is classified as anomalous, the sensor data to the edge server (140) and receiving, at the communication device, from the edge server (140) the further result based on processing the sensor data by the edge server (140).

9. The method (200) of claim 8, wherein the method (200) comprises the further step of continuing to execute the real-time application on the basis of the further result received from the edge server (140), in case the confidence value of the result provided by the real-time application is smaller than the threshold value.

10. The method (200) of claim 8, wherein the method (200) comprises the further step of continuing to execute the real-time application on the basis of the result provided by the real-time application, in case the confidence value of the result provided by the real-time application is equal to or larger than the threshold value.

11. The method (200) of any one of claims 8 to 10, wherein the method (200) further comprises implementing a neural network by the processor (123) of the communication device (120) and wherein the step of determining (205) the confidence value of the result by the processor (123) of the communication device (120) comprises determining the confidence value of the result provided by the real-time application by the neural network.

12. A computer program product comprising program code for performing the method (200) of any one of claims 8 to 11, when executed on a computer or a processor.

## Patentansprüche

1. Kommunikationsvorrichtung (120) zur Kommunikation in einem Kommunikationsnetzwerk (100) mit einem Randserver (140), wobei die Kommunikationsvorrichtung (120) aufweist:
einen Sensor (121), der konfiguriert ist, Sensordaten bereitzustellen;
einen Prozessor (123), der konfiguriert ist, eine Echtzeitanwendung auszuführen, wobei die Echtzeitanwendung konfiguriert ist, die Sensordaten zu verarbeiten und auf der Grundlage der Verarbeitung der Sensordaten ein Ergebnis bereitzustellen, wobei der Prozessor (123) ferner konfiguriert ist, einen Vertrauenswert des Ergebnisses zu bestimmen; und
eine Kommunikationsschnittstelle (125), die konfiguriert ist, falls der Vertrauenswert des durch die Echtzeitanwendung bereitgestellten Ergebnisses kleiner als ein Schwellenwert ist, die Sensordaten an den Randserver (140) zu senden und vom Randserver (140) ein weiteres Ergebnis zu empfangen, das auf der Verarbeitung der Sensordaten durch den Randserver (140) beruht,
wobei die Kommunikationsschnittstelle (125) konfiguriert ist, externe Daten von einer oder mehreren benachbarten Kommunikationsvorrichtungen (130) zu empfangen, und wobei der Prozessor (123) konfiguriert ist, das durch die Echtzeitanwendung bereitgestellte Ergebnis unter Verwendung der externen Daten als anomal oder nicht anomal einzustufen, wobei die externen Daten ein oder mehrere Ergebnisse aufweisen, die durch eine jeweilige Echtzeitanwendung der einen oder der mehreren benachbarten Kommunikationsvorrichtungen (130) bereitgestellt werden, und wobei der Prozessor (123) konfiguriert ist, das durch die Echtzeitanwendung bereitgestellte Ergebnis auf der Grundlage eines Vergleichs zwischen dem durch die Echtzeitanwendung bereitgestellten Ergebnis und den durch die jeweilige Echtzeitanwendung der einen oder der mehreren benachbarten Kommunikationsvorrichtungen (130) bereitgestellten einen oder mehreren Ergebnissen als anomal oder nicht anomal einzustufen; und
wobei die Kommunikationsschnittstelle (125) konfiguriert ist, falls das Ergebnis als anomal eingestuft wird, die Sensordaten an den Randserver (140) zu senden und vom Randserver (140) das weitere Ergebnis zu empfangen, das auf der Verarbeitung der Sensordaten durch den Randserver (140) beruht.

2. Kommunikationsvorrichtung (120) nach Anspruch 1, wobei der Prozessor (123) ferner konfiguriert ist, die Echtzeitanwendung auf der Grundlage des vom Randserver (140) empfangenen weiteren Ergebnisses weiter auszuführen, falls der Vertrauenswert des durch die Echtzeitanwendung bereitgestellten Ergebnisses kleiner als der Schwellenwert ist.

3. Kommunikationsvorrichtung (120) nach Anspruch 1, wobei der Prozessor (123) ferner konfiguriert ist, die Echtzeitanwendung auf der Grundlage des durch die Echtzeitanwendung bereitgestellten Ergebnisses weiter auszuführen, falls der Vertrauenswert des durch die Echtzeitanwendung bereitgestellten Ergebnisses größer oder gleich dem Schwellenwert ist.

4. Kommunikationsvorrichtung (120) nach einem der vorhergehenden Ansprüche, wobei der Prozessor (123) konfiguriert ist, ein neuronales Netzwerk zu implementieren, wobei das neuronale Netzwerk konfiguriert ist, den Vertrauenswert des durch die Echtzeitanwendung bereitgestellten Ergebnisses zu bestimmen.

5. Kommunikationsvorrichtung (120) nach Anspruch 1, wobei der Prozessor (123) ferner konfiguriert ist, das durch die Echtzeitanwendung bereitgestellte Ergebnis unter Verwendung von internen Daten, die in der Kommunikationsvorrichtung (120) gespeichert sind und/oder durch sie erzeugt werden, als anomal oder nicht anomal einzustufen, wobei die internen Daten Daten, die durch eine weitere Sensorvorrichtung der Kommunikationsvorrichtung (120) bereitgestellt werden, ein oder mehrere durch die Echtzeitanwendung bereitgestellte vorherige Ergebnisse, Positionsdaten der Kommunikationsvorrichtung (120), und/oder Kartendaten der Kommunikationsvorrichtung (120) aufweisen.

6. Kommunikationsvorrichtung (120) nach einem der vorhergehenden Ansprüche, wobei der Sensor (121) konfiguriert ist, einen Sensordatenstrom bereitzustellen und wobei die Sensordaten einen zeitlichen Abschnitt des Sensordatenstroms aufweisen.

7. Kommunikationssystem, das aufweist:
einen Randserver (140), der einen Prozessor (141) und eine Kommunikationsschnittstelle (143) aufweist; und
eine Kommunikationsvorrichtung (120) nach einem der vorhergehenden Ansprüche;
wobei die Kommunikationsschnittstelle (143) des Randservers (140) konfiguriert ist, falls der Vertrauenswert des durch die Echtzeitanwendung bereitgestellten Ergebnisses kleiner als der Schwellenwert ist, die Sensordaten von der Kommunikationsvorrichtung (120) zu empfangen, wobei der Prozessor (141) des Randservers (140) konfiguriert ist, die Sensordaten zu verarbeiten und ein weiteres Ergebnis auf der Grundlage der Verarbeitung der Sensordaten bereitzustellen, und wobei die Kommunikationsschnittstelle (143) des Randservers (140) ferner konfiguriert ist, das weitere Ergebnis an die Kommunikationsvorrichtung (120) zu senden.

8. Verfahren (200) zum Betreiben einer Kommunikationsvorrichtung (120) in einem Kommunikationsnetzwerk (100) mit einem Randserver (140), wobei das Verfahren (200) aufweist:
Bereitstellen (201) von Sensordaten durch einen Sensor (121) der Kommunikationsvorrichtung (120);
Ausführen (203) einer Echtzeitanwendung durch einen Prozessor (123) der Kommunikationsvorrichtung (120), wobei die Echtzeitanwendung konfiguriert ist, die Sensordaten zu verarbeiten und auf der Grundlage der Verarbeitung der Sensordaten ein Ergebnis bereitzustellen;
Bestimmen (205) eines Vertrauenswerts des Ergebnisses durch den Prozessor (123) der Kommunikationsvorrichtung (120);
Senden (207), durch die Kommunikationsvorrichtung, falls der Vertrauenswert des durch die Echtzeitanwendung bereitgestellten Ergebnisses kleiner als ein Schwellenwert ist, der Sensordaten an den Randserver (140); und
Empfangen (209), an der Kommunikationsvorrichtung (120), eines weiteres Ergebnisses vom Randserver (140), das auf der Verarbeitung der Sensordaten durch den Randserver (140) beruht, wobei das Verfahren (200) die weiteren Schritte aufweist:
Empfangen, an der Kommunikationsvorrichtung (120), von externen Daten von einer oder mehreren benachbarten Kommunikationsvorrichtungen (130) und Einstufen des durch die Echtzeitanwendung bereitgestellten Ergebnisses als anomal oder nicht anomal unter Verwendung der externen Daten, wobei die externen Daten ein oder mehrere Ergebnisse aufweisen, die durch eine jeweilige Echtzeitanwendung der einen oder der mehreren benachbarten Kommunikationsvorrichtungen (130) bereitgestellt werden, und wobei das Einstufen des durch die Echtzeitanwendung bereitgestellten Ergebnisses als anomal oder nicht anomal das Vergleichen des durch die Echtzeitanwendung bereitgestellten Ergebnisses mit den durch die jeweilige Echtzeitanwendung der einen oder der mehreren benachbarten Kommunikationsvorrichtungen (130) bereitgestellten einen oder mehreren Ergebnissen aufweist; und
Senden, durch die Kommunikationsvorrichtung, falls das Ergebnis als anomal eingestuft wird, der Sensordaten an den Randserver (140) und
Empfangen, an der Kommunikationsvorrichtung, des weiteren, auf der Verarbeitung der Sensordaten durch den Randserver (140) beruhenden, Ergebnisses vom Randserver (140).

9. Verfahren (200) nach Anspruch 8, wobei das Verfahren (200) den weiteren Schritt des weiteren Ausführens der Echtzeitanwendung auf der Grundlage des vom Randserver (140) empfangenen weiteren Ergebnisses aufweist, falls der Vertrauenswert des durch die Echtzeitanwendung bereitgestellten Ergebnisses kleiner als der Schwellenwert ist.

10. Verfahren (200) nach Anspruch 8, wobei das Verfahren (200) den weiteren Schritt des weiteren Ausführens der Echtzeitanwendung auf der Grundlage des durch die Echtzeitanwendung bereitgestellten Ergebnisses aufweist, falls der Vertrauenswert des durch die Echtzeitanwendung bereitgestellten Ergebnisses größer oder gleich dem Schwellenwert ist.

11. Verfahren (200) nach einem der Ansprüche 8 bis 10, wobei das Verfahren (200) ferner das Implementieren eines neuronalen Netzwerks durch den Prozessor (123) der Kommunikationsvorrichtung (120) aufweist und wobei der Schritt des Bestimmens (205) des Vertrauenswerts des Ergebnisses durch den Prozessor (123) der Kommunikationsvorrichtung (120) das Bestimmen des Vertrauenswerts des durch die Echtzeitanwendung bereitgestellten Ergebnisses durch das neuronale Netzwerk aufweist.

12. Computerprogrammprodukt, das einen Programmcode zum Ausführen des Verfahrens (200) nach einem der Ansprüche 8 bis 11 aufweist, wenn es auf einem Computer oder einem Prozessor ausgeführt wird.

## Revendications

1. Dispositif de communication (120) pour une communication dans un réseau de communication (100) ayant un serveur de bord (140), ledit dispositif de communication (120) comprenant :
un capteur (121) prévu pour fournir des données de capteur ;
un processeur (123) prévu pour exécuter une application en temps réel, ladite application en temps réel étant prévue pour traiter les données de capteur et pour délivrer un résultat sur la base d'un traitement des données de capteur, ledit processeur (123) étant en outre prévu pour déterminer un degré de confiance du résultat ; et
une interface de communication (125) prévue pour transmettre les données de capteur au serveur de bord (140), si le degré de confiance du résultat délivré par l'application en temps réel est inférieur à un degré seuil, et pour recevoir du serveur de bord (140) un autre résultat sur la base d'un traitement des données de capteur par le serveur de bord (140), où l'interface de communication (125) est prévue pour recevoir des données externes d'un ou de plusieurs dispositifs de communication voisins (130) et où le processeur (123) est prévu pour classifier le résultat délivré par l'application en temps réel comme anormal ou non anormal au moyen des données externes, où les données externes comprennent un ou plusieurs résultats délivrés par une application en temps réel respective du ou des dispositifs de communication voisins (130), et où le processeur (123) est prévu pour classifier le résultat délivré par l'application en temps réel comme anormal ou non anormal sur la base d'une comparaison entre le résultat délivré par l'application en temps réel et le ou les résultats délivrés par l'application en temps réel respective du ou des dispositifs de communication voisins (130) ; et
où l'interface de communication (125) est prévue pour transmettre les données de capteur au serveur de bord (140) si le résultat est classifié comme anormal, et pour recevoir du serveur de bord (140) l'autre résultat sur la base du traitement des données de capteur par le serveur de bord (140).

2. Dispositif de communication (120) selon la revendication 1, où le processeur (123) est en outre prévu pour poursuivre l'exécution de l'application en temps réel sur la base de l'autre résultat reçu du serveur de bord (140), si le degré de confiance du résultat délivré par l'application en temps réel est inférieur au degré seuil.

3. Dispositif de communication (120) selon la revendication 1, où le processeur (123) est en outre prévu pour poursuivre l'exécution de l'application en temps réel sur la base du résultat délivré par l'application en temps réel, si le degré de confiance du résultat délivré par l'application en temps réel est égal ou supérieur au degré seuil.

4. Dispositif de communication (120) selon l'une des revendications précédentes, où le processeur (123) est prévu pour implémenter un réseau neuronal, ledit réseau neuronal étant prévu pour déterminer le degré de confiance du résultat délivré par l'application en temps réel.

5. Dispositif de communication (120) selon la revendication 1, où le processeur (123) est en outre prévu pour classifier le résultat délivré par l'application en temps réel comme anormal ou non anormal au moyen de données internes stockées et/ou générées par ledit dispositif de communication (120),
où les données internes comprennent des données fournies par un autre dispositif de capteur du dispositif de communication (120), un ou plusieurs résultats antérieurs délivrés par l'application en temps réel, des données de position du dispositif de communication (120), et/ou des données cartographiques du dispositif de communication (120).

6. Dispositif de communication (120) selon l'une des revendications précédentes, où le capteur (121) est prévu pour fournir un flux de données de capteur et où les données de capteur comprennent une partie temporelle du flux de données de capteur.

7. Système de communication, comprenant :
un serveur de bord (140) comprenant un processeur (141) et une interface de communication (143) ; et un dispositif de communication (120) selon l'une des revendications précédentes ;
où l'interface de communication (143) du serveur de bord (140) est prévue pour recevoir les données de capteur du dispositif de communication (120) si le degré de confiance du résultat délivré par l'application en temps réel est inférieur au degré seuil, où le processeur (141) du serveur de bord (140) est prévu pour traiter les données de capteur et pour délivrer un autre résultat sur la base du traitement des données de capteur, et où l'interface de communication (143) du serveur de bord (140) est en outre prévue pour transmettre l'autre résultat au dispositif de communication (120).

8. Procédé (200) de fonctionnement d'un dispositif de communication (120) dans un réseau de communication (100) ayant un serveur de bord (140), ledit procédé (200) comprenant :
la fourniture (201) de données de capteur par un capteur (121) du dispositif de communication (120) ;
l'exécution (203) d'une application en temps réel par un processeur (123) du dispositif de communication (120), ladite application en temps réel étant prévue pour traiter les données de capteur et pour délivrer un résultat sur la base d'un traitement des données de capteur ;
la détermination (205) d'un degré de confiance du résultat par le processeur (123) du dispositif de communication (120) ;
la transmission (207) des données de capteur au serveur de bord (140) par le dispositif de communication, si le degré de confiance du résultat délivré par l'application en temps réel est inférieur à un degré seuil ; et
la réception (209) sur le dispositif de communication (120) d'un autre résultat du serveur de bord (140) sur la base du traitement des données de capteur par le serveur de bord (140),
ledit procédé (200) comprenant les étapes suivantes :
la réception sur le dispositif de communication (120) de données externes d'un ou de plusieurs dispositifs de communication voisins (130) et la classification du résultat délivré par l'application en temps réel comme anormal ou non anormal au moyen des données externes, lesdites données externes comprenant un ou plusieurs résultats délivrés par une application en temps réel respective du ou des dispositifs de communication voisins (130), et la classification du résultat délivré par l'application en temps réel comme anormal ou non anormal comprenant la comparaison du résultat délivré par l'application en temps réel avec le ou les résultats délivrés par l'application en temps réel respective du ou des dispositifs de communication voisins (130) ; et
la transmission des données de capteur au serveur de bord (140) par le dispositif de communication, si le résultat est classifié comme anormal, et la réception sur le dispositif de communication de l'autre résultat en provenance du serveur de bord (140) sur la base du traitement des données de capteur par le serveur de bord (140).

9. Procédé (200) selon la revendication 8, où ledit procédé (200) comprend l'étape complémentaire de poursuite de l'exécution de l'application en temps réel sur la base de l'autre résultat reçu du serveur de bord (140), si le degré de confiance du résultat délivré par l'application en temps réel est inférieur au degré seuil.

10. Procédé (200) selon la revendication 8, où procédé (200) comprend l'étape complémentaire de poursuite de l'exécution de l'application en temps réel sur la base du résultat délivré par l'application en temps réel, si le degré de confiance du résultat délivré par l'application en temps réel est égal ou supérieur au degré seuil.

11. Procédé (200) selon l'une des revendications 8 à 10, où ledit procédé (200) comprend en outre l'implémentation d'un réseau neuronal par le processeur (123) du dispositif de communication (120) et où l'étape de détermination (205) du degré de confiance du résultat par le processeur (123) du dispositif de communication (120) comprend la détermination par le réseau neuronal du degré de confiance du résultat délivré par l'application en temps réel.

12. Produit de programme informatique, comprenant un code programme pour l'exécution du procédé (200) selon l'une des revendications 8 à 11, lorsque celui-ci est lancé sur un ordinateur ou un processeur.
